Europäisches Patentamt

European Patent Office

Office européen des brevets

(19)

(11) Publication number: **0 028 535**
**B1**

(12) **EUROPEAN PATENT SPECIFICATION**

(45) Date of publication of patent specification: **27.07.83**

(51) Int. Cl.³: **A 23 K  3/02,** A 23 K  3/03, A 23 K  1/16

(21) Application number: **80303945.2**

(22) Date of filing: **05.11.80**

(54) **Method for ensiling feed and the additive used for the method.**

(30) Priority: **06.11.79 FI 793479**

(43) Date of publication of application:
**13.05.81 Bulletin 81/19**

(45) Publication of the grant of the patent:
**27.07.83 Bulletin 83/30**

(84) Designated Contracting States:
**AT BE CH DE FR IT LI LU NL SE**

(56) References cited:
**DE - C - 722 691**
**GB - A - 1 245 830**
**US - A - 2 054 026**

**CHEMICAL ABSTRACTS, vol. 84, no. 7,**
**February 16, 1976, page 360, abstract no.**
**42370k COLUMBUS, Ohio (US) J.A. MEITNER:**
**"Value of lignin sulfonates"**

**The file contains technical information**
**submitted after the application was filed and not**
**included in this specification**

(73) Proprietor: **Farmos-Yhtymä Oy**
**P.O. Box 425**
**SF-20101 Turku 10 (FI)**

(72) Inventor: **Merensalmi, Matti Johannes**
**Koukkukankareenkuga 3 as.12**
**SF-20310 Turku 31 (FI)**
Inventor: **Ylinen, Lauri Erik**
**Hurtinkatu 12 B 7**
**SF-20600 Turku 60 (FI)**

(74) Representative: **Warden, John Christopher et al,**
**R.G.C. Jenkins & Co. 12-15, Fetter Lane**
**London EC4A 1PL (GB)**

Courier Press, Leamington Spa, England

# 0 028 535

## Method for ensiling feed and the additive used for the method

The present invention relates to a method for producing silage and to the additive used in the method. Feed ensiling methods have been known for a long time, where feed is treated with different kinds of acids or their salts either together or as compounds, and the feed produced in this way is stored under nearly airless conditions.

It is also known that sugars added to the feed will direct the microbic functions of the ensilation process in a favourable way and will further the production of a good feed. The method in question has been suggested among other treatments in Canadian Patent No. 355,191, where the sugars were obtained by hydrolysing wood products. The wood sugars are considered in the patent more favourable than cane sugar or beet sugar. The advantage of the method is that the hydrolysate contains the acid used in the hydrolysis which lowers the feed pH, which in turn affects the ensilation in a positive way.

The use of wood molasses, that is a solution derived from the waste liquor from sulfite pulping by ultrafiltration and evaporation, to grain and mash ensilation, has been treated in the articles listed below. Wood molasses has a low MW fraction of the original sulphonised lignin and a higher proportion of sugars. Maataloustieteellinen Aikakauskirja (=Agricultural Periodical) Vol. 50, 1978, pp 206—211, Maija-Liisa Salo: Wood molasses as the additive of fresh grain ensilation (Puumelassi tuoreviljan sailontaaineena).

A mash solution evaporated to a DM (dry matter) content of about 55% was used in the trial. From this solution about 2/3 of the originally included lignin sulfonates had been dehydrated. The pH of the solution was about 2. Amounts of the solution corresponding to 0, 10 and 20% of the feed DM-weight were added to the feed and the feed treated in this way was preserved under certain trial conditions in batches that were nearly anaerobic and others which contained air. The trial results showed that the wood molasses, as a reserve material, is suitable for the anaerobic ensilage of fresh grain and mash, although the appearance of mould on the surface of the silage was a problem. Due to the large amounts of solution used it was possible to get a lower pH in the feed also with the above acidic solution, which further improved the ensilation. The article mentions the favourable effect of the sugars included in the solution, e.g. the wood sugars, propionic acid and acetic acid on the anaerobic ensilation.

The feed obtained in the trial could be classed as very good ensiled feed.

British Patent No. 1,266,648 describes a method, in which grain is treated with an aqueous solution containing lignin sulfonate, acid, and a wetting agent. The aim of this treatment is to have the grain treated chemically and physically so that its nutritive value, especially as regards starch would be more perfectly utilised by the animals. By the above treatment the grain pericarp was made softer so that the treating solution acted upon the starch layer to form a gel. This type of chemical pre-treatment is in many cases a substitute for mechanical hot treatments which have earlier been used for the preliminary manufacturing of feed grain in a form that can be better utilised by the animals. The preliminary treatment in question will also make mechanical treatments much easier, in cases where this is still regarded as necessary. A treatment duration of 1—2 days, was suggested, so that ensiling was not intended.

In the above methods no attention has been paid to the feeding value of silage or to the problem of preserving silage during the whole ensilation period. On the other hand special attention has been paid to the feeding values of the feed in ensilation methods where formaldehyde has been used. It has been proved that formaldehyde has a positive effect on the feed nutrients, primarily when it comes to the protection of proteins against ensilation losses quantitatively and qualitatively.

Unexpectedly we have discovered that spent liquor from pulping contains products that influence the ensilation of feed in a positive way, especially the preservation of protein when the feed is ensiled under anerobic conditions.

According to one aspect of the invention there is provided an additive to be added to animal feed such as grass, grain or mash prior to anerobic ensiling characterised in that the additive comprises lignone sulphonate in acid or in totally or partially, non-toxically, neutralised form, together with a mineral and/or organic acid or a non-toxic salt of such acid(s).

According to another aspect, there is provided a method of ensiling animal feed such as grass, grain or mash in which the feed is treated with an additive to improve palatability and reduce losses in nutritive material characterised in that the feed is treated with lignone sulphonate (SL) in acid or totally or partially non-toxically neutralised form together with a mineral and/or organic acid or a non-toxic salt of such acid(s), the SL calculated as dry matter being added at a rate of 1.5 to 15 g/100g crude protein.

The additive may consist essentially of:

2

| | |
|---|---|
| dry lignone sulphonate in acid or neutralised form | 150—700 g/l |
| mineral acid | 0—9 eq/l |
| organic acid | 0—16 eq/l |

(The total acid content being from 2—16 eq/l.)

It may include:

| | |
|---|---|
| lignone sulphonate as specified in claim 2, calculated as dry matter | 15—40 w/w |
| hydrochloric acid calculated as 37% w/w concentration | 10—35% w/w |
| formic acid calculated as 85% w/w concentration | 10—40% w/w. |

The acid or salt used in the method may be added at a rate of 0.05 to 1.0 eq/100g crude protein (based on the acid equivalent weight).

Preferably mineral acid and organic acid are each added at a rate from 0.02 to 0.6 eq/100g crude protein.

When applied to grass or like fresh-cut vegetable matter, the rate of application on the basis of dry lignone sulphonate is preferably from 0.6 to 5 kg/tonne.

The spent liquor from pulping (otherwise called lignone sulphonate) is obtained after pulping in the form of a weak aqueous solution containing little DM. This solution can be transformed or evaporated into a solution that is better suitable to the ensilation of feed and will then contain 30—70% DM (S.G. 1.22). Such a solution usually contains sulfonised lignin (otherwise known as lignosulphite or lignosulphin) about 12—55%, sugars (lignose and reducing sugars) about 20—60%, hemicellulose and sugar acids (e.g. lignoceric acid) about 18—25%, organic acid (mainly $C_1$—$C_6$ aliphatic carboxylic acids) about 4—12% as well as smaller amounts of other compounds e.g. sodium sulphite and/or dioxan. The spent liquor may originate from sulphate cooking or sulphite cooking. Sulphite cooking includes both acidic sulphite and bisulphite pulping, and the pulping base used is not critical as regards the invention. The tree species used in the pulping is not critical, but naturally the composition of the spent liquor will vary depending on the tree species. The composition of the spent liquor may vary for instance in acidic birch sulphite cooking within the following limits:—

TABLE 1

| | |
|---|---|
| sulfonised lignin | 42—55% of the DM |
| hexose sugars | 4—10% of the DM |
| pentose sugars | 16—22% of the DM |
| sugar acids | 8—10% of the DM |
| acetic and formic acid | 7—12% of the DM |

The sulphur content is about 5—6% of the DM, which is favourable in the feed ensilation solution, because the ruminant often suffers from a lack of sulphur. The tree species used in the cellulose industry are Scots pine, spruce, and birch. The pentose sugars of the spent liquor coming from the birch cooking are almost totally made up of xylose, whose derivative, e.g. xylitol, has been used with great success as a feed additive in order to improve the absorption of the nutrients and among other things for the control of ketosis (British Patent 1542802).

It is also possible to obtain sulphonised lignin commercially in the form of a solid medium brown powder resulting from partial neutralisation with calcium or sodium hydroxide, and such products have been used with success within the scope of the invention.

Such products are referred to hereinafter as calcium lignone sulphonate (CaSL) and sodium lignone sulphonate (NaSL). Typical quoted analyses are as follows in percent by weight:—

3

## TABLE 2

|                          | CaSL | NaSL |
|--------------------------|------|------|
| Moisture                 | 5    | 5    |
| Ash                      | 11   | 21   |
| "Wood sugars"            | 40   |      |
| "Reducing sugars"        |      | 13   |
| pH of 5% w/w aqueous solution | 4.7 | 5.2 |

Hereinafter the following abbreviations will be used to avoid confusion of terminology:

| | |
|---|---|
| lignone sulphonate (generic) | SL |
| lignone sulphonate in the usual acid form (30—70% aqueous solution) | SLA |
| Calcium lignone sulphonate | CaSL |
| Sodium lignone sulphonate | NaCL. |

In the ensilation trials that we have made we have unexpectedly found out that when relatively small amounts of the sulphonised lignin whether in neutral or acid form are used together with different kinds of acids or salts they have a very favourable effect on the ensilation. There is good preservation of the feed protein and the ensilation losses of protein have stayed low both quantitatively and qualitatively.

Acids used together with the SL may comprise a generally known acid or a mixture of these. The acid may be used totally or partially in the form of its salt, suitable cations including ammonium, sodium, calcium potassium and magnesium. It is then possible to use the material for the whole ensilation in dry form. Useful acids include: formic acid, acetic acid, butyric acid, isobutyric acid, valeric acid, isovaleric acid, caproic acid, citric acid, sorbic acid, lactic acid, fumaric acid, acrylic acid, hydrochloric acid, phosphoric acid, and sulphuric acid. $C_1$—$C_6$ aliphatic carboxylic acids are preferred. The different acids have not been shown to influence the ensilation result very much when reacted or mixed according to the form of SL employed. The use of some free acid is preferred, because although the feed proteins could be preserved well simply by using the spent liquor, the other ensiling functions are not always sufficiently effective. Although for instance SLA is extremely acid, the amount used in our invention is still so small that at useful levels of addition the free acid content of the mere lignone sulphonate has little impact upon the pH of the feed. The amount of added free acid is preferably larger when a neutralised derivative of the sulphonised lignin is used. However good results have been obtained without the addition of free acid where e.g. calcium formate is used.

The invention is also very favourable economically, as large amounts of spent liquor from cellulose pulping are available and its disposal constitutes an environmental problem.

The technology of collecting the spent liquor from sulphate pulping has been developed economically, and at the current price the spent liquor is a remarkable source of raw-material where it is put to use by the present invention. The sugars of the spent liquor also influence the ensiling functions of the feed in a positive way, and the feed is augmented by them and by minerals otherwise lacking to the animals.

The trial results have shown that when ensiling feed in accordance with the invention, the amount of water soluble nitrogen in the ensiled feed is notably reduced. The amount of water soluble nitrogen compounds in the feed is a good indicator of the extent to which the feed proteins have been broken down during ensilation into small molecular compounds which are less valuable as food. This influence may be compared to that achieved for instance by using formaldehyde or tannin.

The amount of soluble nitrogen in the feed normally varies depending on the fertilisation of the grass, weather conditions, harvesting and ensilation technique, and the content of nitrite, nitrate, ammonia, amide as well as other soluble compounds of nitrogen will vary greatly as a result of these factors. When ensiled according to the invention, the above breakdown of the protein can, however be substantially prevented. The following examples depict results obtained with the invention. The results show that the significance of the invention is multiple:—

# O 028 535

1. A hygienically good feed is achieved by which it is possible to accomplish efficient animal production.
2. The storage losses of the silage are quantitatively reduced.
3. The nutrients are preserved in a favourable form.
4. It is possible to utilise economically a bi-product whose properties are environmentally difficult.
5. The product cf the invention has, as can be proved, also a nutritional effect. This concerns especially the lignone sulphonate.
6. The method of ensiling is economically favourable.
7. The method of ensiling is generally favourable also from an ensilation and a feeding point-of-view.
8. The ensiling has a particularly favourable effect on the preservation of protein.

The following examples illustrate the invention.
The trials took place at six different farms.

## Example 1

On June 15th, 1978 grass feed having a dry matter content nominally of 15—30% w/w was produced for silos of 1000 kg. The treatments and the results are given in the table below. 5 l/tonne of the following mixtures were applied to the grass by a conventional liquid applicator:

| | | |
|---|---|---|
| Mixture I | formalin (37%) | 55% |
| | acetic acid (80%) | 30% |
| | stabilising solution (34% w/w urea in water) | 15% |
| Mixture II | formic acid (85%) | 100% |
| Mixture $B_1$ | SLA (50% DM) (Table 1) | 40% (200 g/l DM) |
| | hydrochloric acid (37% w/w) (12.2 eq/l) | 30% (3.6 eq/l) |
| | formic acid (85% w/w) (22.1 eq/l) | 30% (6.6 eq/l) |
| Mixture B | SLA (50% DM) | 100% |

The silos were opened on August 7th, 1978 and were fed to bulls to be slaughtered. The feeds smelled fresh, they were palatable and the animals ate them willingly.

### TABLE 3

#### Analysis of the ensiled grass at opening

| | pH | sugar % w/w | $NH_4N$/ tot.N | sol.*N/ tot.N | Butyric acid | kg/f.u.[1] |
|---|---|---|---|---|---|---|
| Mixt. I | 4.7 | 1.52 | 5.2 | 51.8 | 0.015 | 5.10 |
| Mixt. II | 4.8 | 1.86 | 3.0 | 59.8 | 0.031 | 4.86 |
| Mixt. $B_1$ | 3.6 | 1.68 | 2.6 | 51.8 | 0.000 | 4.45 |
| Mixt. B | 4.5 | 0.41 | 7.2 | 53.5 | 0.403 | 5.21 |

\* water-soluble nitrogen: total nitrogen
[1] Kilograms per feed unit

The best results were achieved with mixture $B_1$. It was surprising that the SL together with the acids reduced the breakdown of protein as efficiently as formalin. This is clear from the column showing water-soluble N. The same effect (to a lesser degree) is evident with pure sulphonised lignin.

5

It can also be observed that poor ensiling results were obtained with SL alone. This appears from the large amounts of butyric acid and ammonia nitrogen, as well as from the lower sugar content.

A synergistic effect is indeed demonstrated, since the results, as regards pH and ammonium nitrogen, produced by Mixture $B_1$ are better than the arithmetic mean of Mixture II (formic acid alone) and Mixture B (SLA alone). pH is 4.6:3.6 or 22% lower, and soluble nitrogen is 5.1:2.6 or 49% lower. The same trend is visible in water soluble nitrogen.

Example 2

Three sample feeds (as in Example 1) were produced for silos of 3000 kg (August 3, 1978). The treatments were as follows:

1. Mixture I from Example 1 (5 l/tonne grass).
2. SLA (50% DM) 2 l/tonne + formic acid (85% w/w) 2.5 l/tonne of grass (55.25 eq/tonne crude protein).
3. SLA (50% DM) 5 l/tonne of grass + formic acid (85% w/w) 2.5 l/tonne of grass.

The results as measured on the grass and animals were as follows (20 November 1978):

TABLE 3

| | pH | kg/f.u. | DM dig-estibility % | N-balance* g/day | Consumption g/animal daily | Biological value of the protein | DM-losses % | Losses of crude protein % |
|---|---|---|---|---|---|---|---|---|
| 1. | 4.80 | 5.39 | 73.1 | 7.1 | 1361 | 47.6 | 20.7 | 22.0 |
| 2. | 4.69 | 5.32 | 73.8 | 8.4 | 1333 | 48.3 | 17.1 | 21.2 |
| 3. | 4.66 | 5.35 | 74.1 | 7.3 | 1362 | 46.2 | 20.3 | 24.7 |

* Difference between N intake and N escape in faeces and urine

It is a known fact that the N-balance can be improved by using formaldehyde because if its protein protecting property. At the same time the digestibility will usually sink. From this trial one can surprisingly enough establish that the SL (for example 2 l/tonne = 2.6 kg/tonne or 5.2 g SLA (50% DM) 100 g of crude protein) gave a clearly better result together with 2.5 l of formic acid. An SLA ration 2.5 times as large with the same acid addition gave a slightly poorer result.

It is known that ensiling losses can be reduced by using a silage additive containing formaldehyde and acid (British Patent Nos: 127677 and 1518808). Unexpectedly it has been established that SL and acid has a similar effect. A larger ration of SL caused slightly greater crude protein losses. When silage additives of the type of treatment 1 containing formaldehyde are compared to trials with formic acid alone the differences found have usually been clearly larger than the variations above, i.e. more than 5%.

Example 3

Three silage samples (generally as in Example 1) each of 1200 kg were prepared August 22, 1979. The following mixtures of silage additives were used:

| Trial No. | Mixture | Rate of Application |
|---|---|---|
| Silo I | Formic acid (85%) | 5 l/tonne |
| Silo II | SLA (50% DM) | 3.0 kg/tonne = 2.3 l/tonne) |
| (Mixt. $B_{12}$) | (Formic acid (85%) ( | 1.0 kg/tonne (22.1 eq/tonne) |
| | (Hydrochloric acid ((37%) | 1.0 kg/tonne (12.2 eq/tonne) |
| Silo III | SLA (50% DM) | 2.0 kg/tonne = 1.5 l/tonne) |
| (Mixt. $B_{15}$) | (Formic acid (85%) ( | 1.0 kg/tonne |
| | (Hydrochloric acid ((37%) | 1.0 kg/tonne |

The silos were opened 19 October, 1979 and were fed to dairy cows. No feeding disturbances were observed. The results were as follows:—

TABLE 4

| Treatment | Appearance and smell | pH | $NH_4N/$ tot.N | sol.N/ tot.N | kg/f.u. | Digestive crude protein g/f.u. |
|---|---|---|---|---|---|---|
| Silo I | good | 4.3 | 7.57 | 37.8 | 8.3 | 162 |
| Silo II | good | 4.0 | 5.49 | 19.7 | 8.0 | 167 |
| Silo III | good | 4.5 | 17.54 | 31.5 | 9.2 | 144 |

From the results it is evident that 2.3 l of the SL produced a good result. The proportion of ammonium nitrogen is low and the amount of the water soluble nitrogen about 20% lower than with formic acid alone. When the amount of SL was 1.5 l (silo III), moreover, an effect was produced that prevented the protein breakdown, but the feed quality was no further improved on the basis of the other criteria (pH, $NH_3N$).

Example 4

The adaptability of different acids in the ensilation together with SL was examined in a small silo (4.5 kg grass, nominal 15—30% DM). The trial feeds were stored for 1 month, after which the silos were opened. The trial solutions were as follows:

8

|  |  |  | Composition w/w |
|---|---|---|---|
|  | I | SLA (50% DM) | 60% (300 g/l DM) |
| Mixt. B$_{12}$ | | (Formic acid (85%) ( | 20% (4.4 eq/l) |
|  |  | (Hydrochloric acid (37%) | 20% (2.4 eq/l) |
|  | II | SLA (50% DM) | 60% (300 g/l DM) |
|  |  | Hydrochloric acid (37%) | 40% (4.8 eq/l) |
|  | III | SLA (50% DM) | 60% (300 g/l DM) |
|  |  | Acetic acid (80%) (14.3 eq/l) | 40% (5.7 eq/l) |
|  | IV | SLA (50% DM) | 60% (300 g/l DM) |
|  |  | Formic acid (85%) | 40% (8.8 eq/l) |
|  | V | Formic acid (85%) | 100% (22.1 eq/l) |

5 l/tonne of the trial solutions were applied to the grass. All treatments were splendidly preserved, as is seen from the following characteristic figures.

TABLE 5

| Treatment | Quality % Appearance | pH | NH$_3$N/ tot.N | sol.N/ tot.N | Crude protein % of dry matter | kg/f.u. |
|---|---|---|---|---|---|---|
| I | good | 4.2 | 2.0 | 27.3 | 15.8 | 6.3 |
| II | good | 4.1 | 2.1 | 23.7 | 14.9 | 6.3 |
| III | good | 4.1 | 3.1 | 27.1 | 14.9 | 6.5 |
| IV | good | 4.3 | 3.2 | 25.7 | 14.3 | 6.5 |
| V | good | 4.4 | 2.2 | 30.1 | 14.8 | 6.3 |

Butyric acid was not present in any trial feed. Due to the short ensilation time there had only been a slightly dissolution of the protein. The effect of the SL was, however, still apparent. There did not, however, seem to be a big difference between the different acids.

Example 5

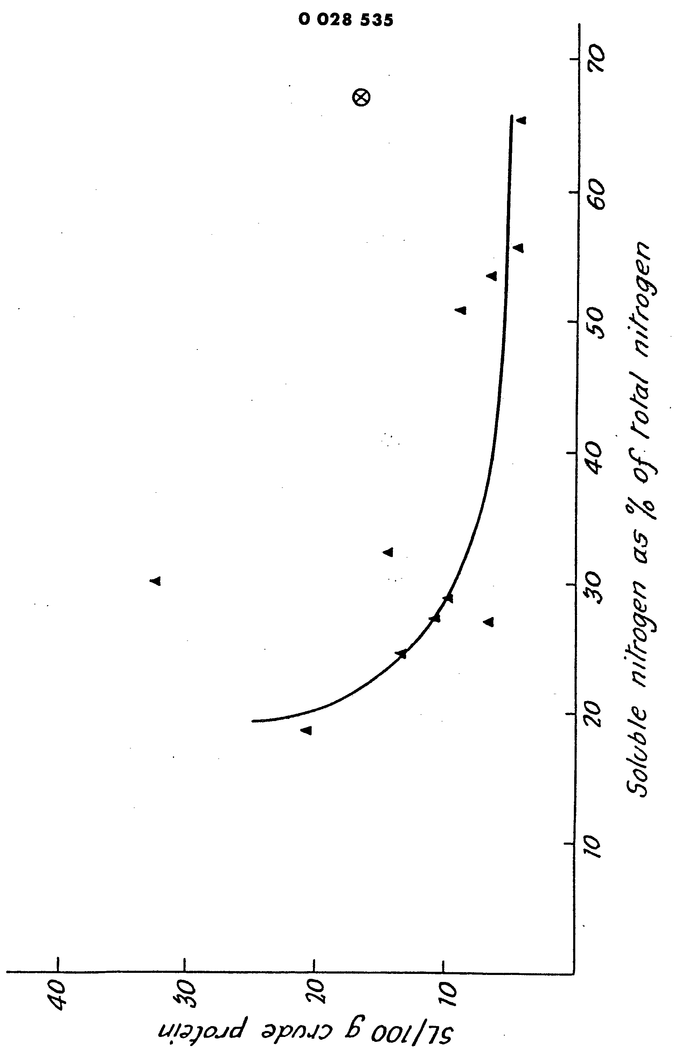

Grass feed (nominal 15—30% DM) was ensiled for about 5 weeks in silos of about 5 kg and a variety of treatments applied. The compositions of the treatments are given in Table 6 and the rate of application and results in terms of soluble nitrogen/total nitrogen are given in Table 7. The results are expressed as a graph in the attached Figure.

TABLE 6

The composition (% w/w) of the treatments were as follows:

|  | $B_{12}$ | $B_1$ | $B_{10}$ | $B_{15}$ | $B_{16}$ | $B_{17}$ | $B_{18}$ | $B_{21}$ |
|---|---|---|---|---|---|---|---|---|
| SLA (50% DM) | 60 | 40 | 30 | 50 | 30 | 70 | 80 | 34 |
| Formic acid 85% | 20 | 30 | 40 | 25 | 35 | 15 | 10 | 33 |
| Hydrochloric acid 37% | 20 | 30 |  | 25 | 35 | 15 | 10 | 33 |
| Phosphoric acid 85% |  |  | 20 |  |  |  |  |  |
| Propionic acid 100% |  |  | 10 |  |  |  |  |  |

TABLE 7

| Treatment | g solution | g SL | g(DM) | eq HCl | eq HCOOH | eq acid | Soluble N/ Total N |
|---|---|---|---|---|---|---|---|
| | [ ——————— | | per 100 g | crude protein | | ——————— ] | |
| $B_{12}$ | 15 | 9.05 | 4.01 | .08 | .07 | .15 | 50.9 |
| $B_1$ | 16.4 | 6.55 | 3.27 | .14 | .11 | .25 | 53.6 |
| $B_{10}$ | 15.3 | 4.58 | 2.29 | — | .13 | .24 | 65.6 |
| $B_{21}$ | 19.0 | 6.41 | 3.21 | .17 | .14 | .31 | 27.6 |
| $B_{12}$ | 18.5 | 11.08 | 5.54 | .10 | .08 | .18 | 27.3 |
| $B_{17}$ | 19.6 | 13.75 | 6.38 | .08 | .06 | .14 | 24.7 |
| $B_{18}$ | 18.25 | 14.60 | 7.30 | .05 | .04 | .09 | 32.1 |
| SLA (50% DM) | | 17.18 | 8.60 | — | — | — | 67.1 |
| $B_{16}$ | 15.56 | 4.67 | 2.39 | .15 | .34 | .49 | 55.8 |
| $B_{12}$ | 17.2 | 10.32 | 5.16 | .09 | .07 | .16 | 28.6 |
| $B_{12}$ | 34.9 | 20.93 | 10.45 | .19 | .15 | .34 | 18.2 |
| $B_{12}$ | 53.9 | 32.33 | 16.17 | .30 | .23 | .53 | 30.0 |

From the Figure it is clear that when the amount of SL is reduced to about 5 g/100 g crude protein the proportion of soluble nitrogen in the total nitrogen grows appreciably. On the other hand if the amount of SL is increased to more than 25 g SL/100 g crude protein no further advantage is achieved. All feeds were blameless with respect to quality, and their pH varied between 3.8 and 4.2. In the trial treatments mixtures of SL and acids were used. When only SLA was used (point ⊗, 17.2 g SL/100 g crude protein), which would seem to be the optimum rate, poor results were obtained. The amount of soluble nitrogen was large and moreover the feed contained an appreciable amount of butyric acid.

## Example 6

Grass samples having a dry matter content of about 20% were ensiled for $1\frac{1}{2}$ months in laboratory silos of about 5 kg capacity after being subjected to the following treatments:

| Trial No. | Treatment | % w/w | Application Rate |
|---|---|---|---|
| A | NaSL | 60 | 5 l/tonne |
| | 37% hydrochloric acid | 20 (2.4 eq/l) | |
| | 85% formic acid | 20 (4.4 eq/l) | |
| B | NaSL | 50 | 5 g/tonne* |
| | Calcium formate | 50 | (54 eq.acid/tonne) |
| C | No additive | | |

* Applied with a solids applicator.

Upon opening all feeds were well preserved and had a fresh smell. There was no butyric acid present. Analyses of the grass samples produced the following results:

TABLE 8

| Trial No. | pH | NH$_4$N/Total N | Sol.N/total N |
|---|---|---|---|
| A | 4.0 | 4.3 | 18.1 |
| B | 4.0 | 4.7 | 29.3 |
| C | 4.0 | 6.6 | 35.3 |

12

**0 028 535**

Example 7

Grass samples were ensiled as in Example 6 ($1\frac{1}{2}$ months), after the following treatments:—

| Trial No. | Treatment | % w/w | Application Rate |
|---|---|---|---|
| D | CaSL | 25 | 5 l/tonne |
| | 37% hydrochloric acid | 25 (3.0 eq/l) | |
| | 85% formic acid | 25 (5.5 eq/l) | |
| | water | 25 | |
| E | NaSL | 25 | 5 l/tonne |
| | 37% hydrochloric acid | 25 (3.0 eq/l) | |
| | 85% formic acid | 25 (5.5 eq/l) | |
| | water | 25 | |
| F | CaSL | 50 (54 eq. acid/tonne) | 4 kg/tonne (applied with a solids applicator) |

Again all feeds were found to be well preserved with a fresh smell and no butyric acid. Analysis of the grass samples produced the following results:

| Trial No. | pH | $NH_4.N$/total N |
|---|---|---|
| D | 4.0 | 7.9 |
| E | 3.9 | 4.9 |
| F | 4.0 | 6.0 |

Example 8

Following the laboratory scale trials with neutralised sulphonised lignin a field trial was conducted, in which about 200 kg grass (20% DM) was preserved with a mixture of 71.4% w/w formic acid (46.6 eq) and 28.6% w/w CaSL at the rate of 3 l/tonne. Upon opening of the silo after $1\frac{1}{2}$ months, the appearance of the feed was good and there was no mould. The pH of the feed was 4.0. The feed was given to dairy cows. Its palatability was good, there was no disturbance of yield and the health of the cows was normal.

The Examples have illustrated the invention as applied to grass of specified dry matter content. The rates of application can vary slightly according to the content of water, but in general are applicable to grass or like vegetable matter of 15—30% w/w dry matter content. When applied to feeds generally, it is preferred to calculate on a crude protein basis and the claims are so constructed. Likewise specified contents of various concentrated acids have been shown in the Examples. Since a variety of acids can be used and it is preferred to consider the amount used in equivalents.

**Claims**

1. An additive to be added to animal feed such as grass, other fresh-cut vegetable matter, grain or mash prior to anaerobic ensiling characterised in that the additive comprises lignone sulphonate in acid or in totally or partially, non-toxically, neutralised form, together with a mineral and/or organic acid or a non-toxic salt of such acid(s).

2. A silage additive according to claim 1 wherein the lignone sulphonate used is an evaporated solution of waste from sulphite or sulphate pulping evaporated to contain from 30 to 70% w/w dry matter and having the following ingredients in percent by weight:

13

| | |
|---|---|
| sulphonised lignin | 12—55 |
| sugars | 20—60 |
| hemicellulose and sugar acids | 18—25 |
| organic acids | 4—12. |

3. A silage additive according to claim 1 wherein the lignone sulphonate comprises calcium or sodium lignone sulphonate.

4. A silage additive according to any preceding claim wherein the mineral acid is selected from sulphuric, hydrochloric or phosphoric acid.

5. A silage additive according to any preceding claim wherein the organic acid is selected from formic acid, acetic acid, butyric acid, isobutyric acid, valeric acid, isovaleric acid, caproic acid, citric acid, sorbic acid, lactic acid, fumaric acid and acrylic acid.

6. A silage additive according to any preceding claim wherein the organic acid is formic acid.

7. A silage additive according to any preceding claim wherein the neutralising cation comprises Na, K, Ca, Mg and/or $NH_4$.

8. A silage additive according to any preceding claim consisting essentially of:—

| | |
|---|---|
| dry lignone sulphonate in acid or neutralised form | 150—700 g/l |
| mineral acid | 0—9 eq/l |
| organic acid | 0—16 eq/l |

the total acid content being from 2 to 16 eq/l.

9. A silage additive according to any preceding claim including:

| | |
|---|---|
| lignone sulphonate as specified in claim 2, calculated as dry matter | 15—40% w/w |
| hydrochloric acid calculated as 37% w/v concentration | 10—35% w/w |
| formic acid calculated as 85% w/v concentration | 10—40% w/w. |

10. A silage additive according to claim 9, including (by weight) equal parts of the said hydrochloric and formic acids and 1.0 to 2 parts lignone sulphonate per one part total acid.

11. A silage additive according to claim 1, comprising:

| | |
|---|---|
| sodium or calcium lignone sulphonate | 15—40% w/w |
| hydrochloric acid calculated as 37% w/v concentration | 10—35% w/w |
| formic acid calculated as 85% w/v concentration | 10—40% w/w. |

12. A silage additive according to claim 1, in solid form consisting essentially of one part calcium or sodium lignone sulphonate and from $\frac{1}{2}$ to $1\frac{1}{2}$ parts by weight of a calcium, sodium, magnesium, potassium and/or ammonium salt of a $C_1$—$C_6$ aliphatic carboxylic acid.

13. A method of ensiling animal feed such as grass, grain or mash in which the feed is treated with an additive to improve palatability and reduce losses in nutritive material characterised in that the feed is treated with lignone sulphonate (SL) in acid or totally or partially non-toxically neutralised form together with a mineral and/or organic acid or a non-toxic salt of such acid(s), the SL calculated as dry matter being added at a rate of 1.5 to 15 g/100 g crude protein.

14. A method according to claim 13 wherein the rate of application is from 4 to 10 g (DM)/100 g crude protein.

15. A method according to claim 13 or 14 wherein the acid or salt is added at the rate of 0.05 to 1.0 eq/100 g crude protein (based on the acid equivalent weight).

14

16. A method according to claim 13, 14 or 15 wherein mineral acid and organic acid are each added at a rate from 0.02 to 0.6 eq/100 g crude protein.

17. A method according to claim 13, 14 or 15 wherein organic acid alone is added at a rate from 0.05 to 1.0 eq/100 g crude protein.

18. A method according to any of claims 13 to 17 wherein the mineral acid is selected from sulphuric, hydrochloric and phosphoric acid.

19. A method according to any of claims 13 to 18 wherein the organic acid is selected from formic acid, acetic acid, butyric acid, isobutyric acid, valeric acid, isovaleric acid, caproic acid, citric acid, sorbic acid, lactic acid, fumaric acid and acrylic acid.

20. A method according to claim 19 wherein the mineral acid is sulphuric or hydrochloric acid and the organic acid is formic acid or acetic acid.

21. A method according to any of claims 13 to 20 applied to grass or like fresh-cut vegetable matter wherein the rate of application on the basis of dry lignone sulphonate is from 0.6 to 5 kg/tonne.

22. A method according to any of claims 13 to 21 wherein there is applied to the feed an additive according to any of claims 2 to 12.

## Patentansprüche

1. Ein Additiv, das zu Tierfutter, wie Gras, andere frisch geschnittene pflanzliche Stoffe, Getreide oder Mengfutter vor dem anaeroben Einsilieren zugegeben wird, gekennzeichnet dadurch, daß das Additiv Lignonsulfonat in saurer oder in vollständig oder teilweise, nicht-toxisch neutralisierter Form zusammen mit einer Mineralsäure und/oder organischen Säure oder einem nicht-toxischen Salz einer solchen Säure oder solchen Säuren enthält.

2. Ein Einsilierungsadditiv nach Anspruch 1, wobei das verwendete Lignonsulfonat eine eingedampfte Lösung der Ablauge der Sulfit- oder Sulfat- Zellstoffherstellung ist, die auf einen trockenmassegehalt von 30 bis 70 Gewichtsprozent eingedampft ist und folgende Bestandteile in Gewichtsprozent enthält:

| | |
|---|---|
| Sulfonisiertes Lignin | 12—55 |
| Zucker | 20—60 |
| Hemicellulose und Zuckersäuren | 18—25 |
| organische Säuren | 4—12 |

3. Eine Einsilierungsadditiv nach Anspruch 1, wobei das Lignonsulfonat Calcium- oder Natrium-Lignonsulfonat umfaßt.

4. Ein Einsilierungsadditiv nach einem der vorhergehenden Ansprüche, wobei die Mineralsäure Schwefelsäure, Salzsäure oder Phosphorsäure ist.

5. Ein Einsilierungsadditiv nach einem der vorangehenden Ansprüche, wobei die organische Säure Ameisensäure, Eissigsäure, Buttersäure, Isobuttersäure, Valeriansäure, Isovaleriansäure, Capronsäure, Citronensäure, Sorbinsäure, Milchsäure, Fumarsäure oder Acrylsäure ist.

6. Ein Einsilierungsadditiv nach einem der vorangehenden Ansprüche, wobei die organische Säure Ameisensäure ist.

7. Ein Einsilierungsadditiv nach einem der vorangehenden Ansprüche, wobei das neutralisierende Kation Na, K, Ca, Mg und/oder $NH_4$ umfaßt.

8. Ein Einsilierungsadditiv nach einem der vorangehenden Ansprüche, bestehend im wesentlichen aus:

| | |
|---|---|
| Trockenes Lignonsulfonat in saurer oder neutralisierter Form | 150—700 g/l |
| Mineralsäure | 0—9 Äq/l |
| organische Säure | 0—16 Äq/l |

wobei der gesamte Säuregehalt 2 bis 16 Äq/l beträgt.

9. Ein Einsilierungsadditiv nach einem der vorangehenden Ansprüche, enthaltend:

| | |
|---|---|
| Lignonsulfonat gemäß Anspruch 2, berechnet als Trockenmasse | 15—40 Gew.-% |

| | |
|---|---|
| Salzsäure, berechnet als 37 Gewichtsprozent Konzentration | 10—35 Gew.-% |
| Ameisensäure, berechnet als 85 Gewichtsprozent konzentration | 10—40 Gew.-%. |

10. Ein Einsilierungsadditiv nach Anspruch 9, enthaltend (nach Gewicht) gleiche Teile Salzsäure und Ameisensäure und 1,0 bis 2 Teile Lignonsulfonat pro Teil Gesamtsäure.

11. Ein Einsilierungsadditiv nach Anspruch 1, enthaltend:

| | |
|---|---|
| Natrium- oder Calcium-Lignon-sulfonat | 15—40 Gew.-% |
| Salzsäure, berechnet als 37 Gewichtsprozent Konzentration | 10—35 Gew.-% |
| Ameisensäure, berechnet als 85 Gewichtsprozent Konzentration | 10—40 Gew.-%. |

12. Ein Einsilierungsadditiv nach Anspruch 1 in fester Form, bestehend im wesentlichen aus einem Teil Calcium oder Natrium-Lignonsulfonat und 1/2 bis 1 1/2 Gewichtsteilen eines Calcium-, Natrium-, Magnesium-, Kalium- und/oder Ammoniumsalzes einer aliphatischen $C_1$—$C_6$-Carbonsäure.

13. Ein Verfahren zum Einsilieren von Tierfutter, wie Gras, Getreide oder Mengfutter, bei dem das Futter mit einem Additiv zur Verbesserung der Schmackhaftigkeit und Verminderung der Verluste an Nährstoffen behandelt wird, gekennzeichnet dadurch, daß das Futter mit Lignonsulfonat (SL) in saurer oder vollständig oder teilweise, nicht toxisch neutralisierter Form zusammen mit einer Mineral- und/ oder organischen Säure oder einem nicht-toxischen Salz einer solchen Säure oder solchen Säuren behandelt wird, wobei das SL berechnet als Trockenmasse in einem Verhältnis von 1,5 bis 15 g/100 g Rohprotein zugesetzt wird.

14. Ein Verfahren nach Anspruch 13, wobei das Anwendungsverhältnis 4 bis 10 g (DM)/100 g Rohprotein beträgt.

15. Ein Verfahren nach Anspruch 13 oder 14, wobei die Säure oder das Salz in einem Verhältnis von 0,05 bis 1,0 Äq/100 g Rohprotein (bezogen auf das Äquivalentgewicht der Säure) zugegeben wird.

16. Ein Verfahren nach Anspruch 13, 14 oder 15, wobei die Mineralsäure und die organische Säure jeweils in einem Verhältnis von 0,02 bis 0,6 Äq/100 g Rohprotein zugegeben werden.

17. Ein Verfahren nach Anspruch 13, 14 oder 15, wobei organische Säure allein in einem Verhältnis von 0,05 bis 1,0 Äq/100 g Rohprotein zugegeben wird.

18. Ein Verfahren nach einem der Ansprüche 13 bis 17, wobei die Mineralsäure Schwefelsäure, Salzsäure oder Phosphorsäure ist.

19. Ein Verfahren nach einem der Ansprüche 13 bis 18, wobei die organische Säure Ameisensäure, Essigsäure, Buttersäure, Isobuttersäure, Valeriansäure, Isovaleriansäure, Capronsäure, Citronensäure, Sorbinsäure, Lactinsäure, Fumarsäure und Acrylsäure ist.

20. Ein Verfahren nach Anspruch 19, wobei die Mineralsäure Schwefelsäure oder Salzsäure und die organische Säure Ameisensäure oder Essigsäure ist.

21. Ein Verfahren nach einem der Ansprüche 13 bis 20, angewendet auf Gras oder ähnliche Frisch geschnittene pflanzliche Stoffe, wobei das Anwendungsverhältnis auf der Basis von trockenem Lignonsulfonat 0,6 bis 5 kg/Tonne beträgt.

22. Ein Verfahren nach einem der Ansprüche 13 bis 21, wobei auf das Futter ein Additiv nach einem der Ansprüche 2 bis 12 angewendet wird.

## Revendications

1. Additif destiné à être ajouté à des aliments pour animaux tels que du fourrage vert, une autre matière végétale fraîchement coupée, des grains ou du mash, avant de procéder à l'ensilage anaérobie, caractérisé en ce que l'additif comprend du lignone-sulfonate sous forme acide ou neutralisée en totalite ou en partie de façon non-toxique, associé à un acide minérale et/ou organique ou à un sel non-toxique de cet acide ou de ces acides.

2. Additif d'ensilage selon la revendication 1, caractérisé en ce que le lignone-sulfonate utilisé est une solution évaporée de résidu provenant d'un procédé de fabrication de pâte au sulfite ou au sulfate, évaporé jusqu'à ce que sa teneur en matière séche soit de 30 à 70% en p/p et contenant les ingrédients suivants, en pourcentages en poids:

**0 028 535**

| | |
|---|---|
| lignine sulfonée | 12—55 |
| sucres | 20—60 |
| hemicellulose et acides de sucre | 18—25 |
| acides organiques | 4—12 |

3. Additif d'ensilage selon la revendication 1, caractérisé en ce que le lignone sulfonate comprend le lignone sulfonate de calcium ou de sodium.

4. Additif d'ensilage selon l'une quelconque des revendications précédentes, caractérisé en ce que l'acide minérale est choisi parmi les acides sulfurique, chlorhydrique ou phosphonique.

5. Additif d'ensilage selon l'une quelconque des revendications précédentes, caractérisé en ce que l'acide organique est choisi parmi les acides formique, acétique, butyrique, isobutyrique, valérique, isovalérique, caproïque, critique, sorbique, lactique, fumarique et acrylique.

6. Additif d'ensilage selon l'une quelconque des revendications précédentes, caractérisé en ce que l'acide organique est l'acide formique.

7. Additif d'ensilage selon l'une quelconque des revendications précédentes, caractérisé en ce que le cation neutralisant comprend les cations suivants: Na, K, Ca, Mg et/ou $NH_4$.

8. Additif d'ensilage selon l'une quelconque des revendications précédentes, caractérisé en ce qu'il consiste essentiellement en:

| | |
|---|---|
| lignone sulfonate sec sous forme acide ou neutralisée | 150—170 g/l |
| Acide minérale | 0—9 eq/l |
| Acide organique | 0—16 eq/l |

la teneur totale en acides étant comprise entre 2 et 16 eq/l.

9. Additif d'ensilage selon l'une quelconque des revendications précédentes, caractérisé en ce qu'il comprend:

| | |
|---|---|
| lignone sulfonate selon la revendication 2, calculé en matière sèche | 15—40% enp/p |
| Acide chlorhydrique, calculé pour une concentration de 37% en p/v | 10—35% enp/p |
| Acide formique, calculé pour une concentration de 85% en p/v | 10—40% enp/p |

10. Additif d'ensilage selon la revendication 8, caractérisé en ce qu'il comprend des parties égales en poids, des acides chlorhydrique et formique susdits et 1,0 à 2 parties de lignone sulfonate par partie d'acide total.

11. Additif d'ensilage selon la revendication 1, caractérisé en ce qu'il comprend:

| | |
|---|---|
| Lignone sulfonate de sodium ou de calcium | 15—40% enp/p |
| Acide chlorhydrique calculé à la concentration de 37% en p/v | 10—35% enp/p |
| Acide formique, calculé à la concentration de 85% en p/v | 10—40% enp/p |

12. Additif d'ensilage selon la revendication 1, caractérisé en ce qu'il se présente sous forme solide comprenant essentiellement une partie de lignone-sulfonate de calcium ou de sodium et de 1/2 à 1 1/2 partie en poids d'un sel de calcium, de sodium, de magnésium, de potassium et/ou d'ammonium d'un acide carboxylique aliphatique en $C_1$—$C_6$.

13. Procédé d'ensilage d'aliments pour animaux tels que du fourrage vert, des graines ou du mash dans lequel les aliments sont traités par un additif pour en améliorer les qualités gustatives et réduire les pertes de substances nutritives, caractérisé en ce que l'aliment est traité par du lignone sulfonate

17

## O 028 535

(LS) sous forme acide ou neutralisée en totalité ou en partie de façon non-toxique, associé à un acide minérale et/ou organique ou à un sel non-toxique de cet acide ou de ces acides, le LS calculé en matière sèche étant ajouté à raison de 1,5 à 15 g/100 g de protéines brutes.

14. Procédé selon la revendication 13, caractérisé en ce que le taux d'application est compris entre 4 et 10 g (en matière sèche)/100 g de protéines brutes.

15. Procédé selon la revendication 13 ou 14, caractérisé n ce que l'acide ou le sel est ajouté à raison de 0,05 à 1,0 éq/100 g de protéines brutes (par rapport au poids équivalent d'acide).

16. Procédé selon les revendications 13, 14 ou 15, caractérisé en ce que l'acide minéral et l'acide organique sont ajoutés chacun à raison de 0,02 à 0,6 éq/100 g de protéines brutes.

17. procédé selon la revendication 13, 14 ou 15, caractérisé en ce que de l'acide organique seul est ajouté, à raison de 0,05 à 1,0 éq/100 g de protéines brutes.

18. Procédé selon l'une quelconque des revendications 13 à 16, caractérisé en ce que l'acide minérale est choisi parmi les acides sulfurique, chlorhydrique et phosphorique.

19. Procédé selon l'une quelconque des revendications 13 à 18, caractérisé en ce que l'acide organique est choisi parmi les acides formique, acétique, butyrique, isobutyrique, valérique, isovalérique, caproïque, citrique, sorbique, lactique, fumarique et acrylique.

20. Procédé selon la revendication 19, caractérisé en ce que l'acide minéral est l'acide sulfurique ou chlorhydrique et l'acide organique est l'acide formique ou acétique.

21. Procédé selon l'une quelconque des revendications 13 à 20, appliqué à, du fourrage vert ou à une matière végétale fraîchement coupée analogue, caractérisé en ce que le taux d'application par rapport au lignine-sulfonate sec est de 0,6 à 5 kg/tonne.

22. Procédé selon l'une quelconque des revendications 13 à 21, caractérisé en ce qu'on applique à des aliments, un additif selon l'une quelconque des revendications 2 à 12.

18